# EUROPÄISCHE PATENTSCHRIFT

(11) **EP 1 790 507 B1**
(45) Veröffentlichungstag und Bekanntmachung des Hinweises auf die Patenterteilung: **14.07.2010**
(21) Anmeldenummer: 06021862.5
(22) Anmeldetag: 18.10.2006
(51) Int. Cl.: B60H 1/00

(54) **Wärmetauscherbaugruppe für eine Fahrzeugheiz- oder Klimaanlage**
Heat exchanger assembly for a vehicle air conditioning unit
Echangeur de chaleur pour un dispositif de climatisation d'une véhicule

(30) Priorität: 28.11.2005 DE 102005056642
(43) Veröffentlichungstag der Anmeldung: 30.05.2007
(73) Patentinhaber: J. Eberspächer GmbH & Co. KG, 73730 Esslingen (DE)
(72) Erfinder: Schlecht, Patric, 73760 Ostfildern (DE); Lindl, Bruno, Dr., 76327 Pfinztal (DE); Collmer, Andreas, 73773 Aichwald (DE); Haefner, Michael, 70469 Stuttgart (DE)
(74) Vertreter: Ruttensperger, Bernhard

(56) Entgegenhaltungen:
- EP-A1- 0 215 344
- DE-A1- 10 218 157
- US-A- 2 651 505
- US-A- 5 758 720

## Beschreibung

Die folgende Erfindung betrifft eine Wärmetauscherbaugruppe für eine Einrichtung zur Konditionierung von in einen Fahrzeuginnenraum einzuleitende Luft, umfassend einen langgestreckten Wärmetauscherkörper, der in einem Luftführungsgehäuse so zu positionieren ist, dass seine Längserstreckungsrichtung im Wesentlichen quer zur Luftströmungsrichtung ist, sowie eine Mehrzahl von von dem Wärmetauscherkörper sich erstreckenden, zueinander im Wesentlichen parallelen Wärmeübertragungsrippen.

Eine derartige Wärmetauscherbaugruppe ist aus der DE 102 11 591 A1 bekannt. Der langgestreckte und im Wesentlichen rohrartig ausgestaltete Wärmetauscherkörper erstreckt sich in einem Luftführungsgehäuse quer zur Luftströmungsrichtung und ist an seinen beiden Endbereichen an Wandungen des Luftströmungsgehäuses getragen. Die Wärmeübertragungsrippen sind am Außenumfang des Wärmetauscherkörpers nebeneinanderliegend angeordnet und sind so orientiert, dass ihre Oberflächen im Wesentlichen parallel zur Luftströmungsrichtung und somit quer zur Längserstreckung des Wärmetauscherkörpers liegen. Auf diese Art und Weise kann für die den Wärmetauscherkörper bzw. die Wärmeübertragungsrippen umströmende Luft eine vergleichsweise große Wärme-übertragungsoberfläche bereitgestellt werden und somit die beispielsweise im Verbrennungsbetrieb eines mit dem Wärmetauscherkörper gekoppelten Brenners entstehende Wärme effizient auf die in den Innenraum eines Fahrzeugs einzuleitende Luft übertragen werden.

Aus der US-A-5758720 ist als nächster Stand der Technik eine Wärmetauscherbaugruppe bekannt, bei welcher eine Mehrzahl rohrartiger, abgeflachter Wäremtauscherkörper nebeneinander und zwischen sich Durchströmräume für zu erwärmende Luft lassende Wärmetauscherkörper vorgesehen sind. Zwischen diesen erstrecken sich Verbindungsstege. Zwischen jeweils zwei derartigen Verbindungsstegen ist eine wabenartige oberflächenvergrößernde Baugruppe derart angeordnet, dass sie mit den Verbindungsstegen einerseits und den beiden durch diese verbundenen Wärmetauscherkörper andererseits in Kontakt ist.

Es ist die Aufgabe der vorliegenden Erfindung, eine Wärmetauscherbaugruppe vorzusehen, welche in einem Luftführungsgehäuse einer Einrichtung zur Konditionierung von in einen Fahrzeuginnenraum einzuleitender Luft positionierbar ist, bei welcher Wärmetauscherbaugruppe durch einfach und präzise zu realisierende Maßnahmen eine erhöhte Wärmeübertragungseffizienz erlangt werden kann.

Erfindungsgemäß wird diese Aufgabe gelöst durch eine Wärmetauscherbaugruppe für eine Einrichtung zur Konditionierung von in einen Fahrzeuginnenraum einzuleitende Luft, umfassend einen langgestreckten Wärmetauscherkörper, der in einem Luftführungsgehäuse so zu positionieren ist, dass seine Längserstreckungsrichtung im Wesentlichen quer zur Luftströmungsrichtung ist, sowie eine Mehrzahl von von dem Wärmetauscherkörper sich erstreckenden, zueinander im Wesentlichen parallelen Wärmeübertragungsrippen, wobei in wenigstens einem zwischen zwei Wärmeübertragungsrippen gebildeten Zwischenraum wenigstens eine oberflächenvergrößernde Baugruppe vorgesehen ist.

Eine definierte Positionierung derartiger oberflächenvergrößernder Elementewird dadurch erlangt, dass wenigstens eine Wärmeübertragungsrippe wenigstens eine Aufnahmeaussparung für eine oberflächenvergrößernde Baugruppe aufweist. Um dabei das Anbringen zu erleichtern, ist vorgesehen, dass die Aufnahmeaussparung in Richtung zu einem von dem Wärmetauscherkörper entfernt liegenden Ende der Wärmeübertragungsrippe offen ist.

Bei der vorliegenden Erfindung wird also nicht nur die Oberfläche der am Wärmetauscherkörper vorgesehenen Wärmeübertragungsrippen genutzt, sondern der Zwischenraum zwischen einzelnen Rippen wird noch zusätzlich genutzt, um durch die dort vorhandenen oberflächenvergrößernden Baugruppen die Wechselwirkung zwischen der zu erwärmenden Luft und der Wärmetauscherbaugruppe weiter zu verbessern.

Beispielsweise kann vorgesehen sein, dass die oberflächenvergrößernde Baugruppe wenigstens ein oberflächenvergrößerndes Element umfasst, das mit wenigstens einer der den Zwischenraum begrenzenden Wärmeübertragungsrippen in Wärmeübertragungskontakt steht.

Eine sehr große Oberfläche kann in dem nur begrenzten Volumenbereich zwischen zwei Wärmeübertragungsrippen beispielsweise dadurch bereitgestellt werden, dass das oberflächenvergrößernde Element wenigstens bereichsweise mit ondulierender oder rippenartiger Form ausgebildet ist, wobei weiterhin vorgesehen sein kann, dass das oberflächenvergrößernde Element an Scheitelbereichen mit wenigstens einer Wärmeübertragungsrippe in Wärmeübertragungskontakt steht.

Zur Festlegung eines derartigen oberflächenvergrößernden Elementes kann beispielsweise vorgesehen sein, dass dieses an einem plattenartigen Träger getragen ist und dass der plattenartige Träger an einer der den Zwischenraum begrenzenden Wärmeübertragungsrippen festgelegt ist.

Aus Gründen des einfacheren Aufbaus und zur möglichst effizienten Oberflächenvergrößerung wird weiterhin vorgeschlagen, dass an einer Wärmeübertragungsrippe mehrere Aufnahmeaussparungen nebeneinander vorgesehen sind.

Die feste Anbindung der oberflächenvergrößernden Baugruppe kann beilspielsweise dadurch erlangt werden, dass wenigstens eine oberflächenvergrößernde Baugruppe mit wenigstens einer Wärmeübertragungsrippe durch Verkleben oder/und Verlöten oder/und Verspannen, also Presspassung, fest verbunden ist.

Die vorliegende Erfindung betrifft ferner eine Einrichtung zum Konditionieren von in einen Fahrzeuginnenraum einzuleitender Luft, umfassend ein Luftführungsgehäuse und ein sich in dem Luftführungsgehäuse erstreckende erfindungsgemäße Wärmetauscherbaugruppe. Bei dieser Einrichtung kann weiterhin vorgesehen sein, dass der Wärmetauscherbaugruppe ein mit flüssigem Brennstoff zu speisender Brennerbereich zugeordnet ist.

Die Erfindung wird nachfolgend mit Bezug auf die beiliegenden Zeichnungen detailliert beschrieben. Es zeigt
- Fig. 1: eine perspektivische Ansicht einer erfindungsgemäßen Wärmetauscherbaugruppe;
- Fig. 2: eine weitere perspektivische Ansicht einer erfindungsgemäßen Wärmetauscherbaugruppe mit herausgelösten oberflächenvergrößernden Baugruppen;
- Fig. 3: eine Längsschnittansicht einer erfindungsgemäßen Wärmetauscherbaugruppe in einem Luftführungsgehäuse;
- Fig. 4: einen Ausschnitt einer abgewandelten Ausgestaltungsform.

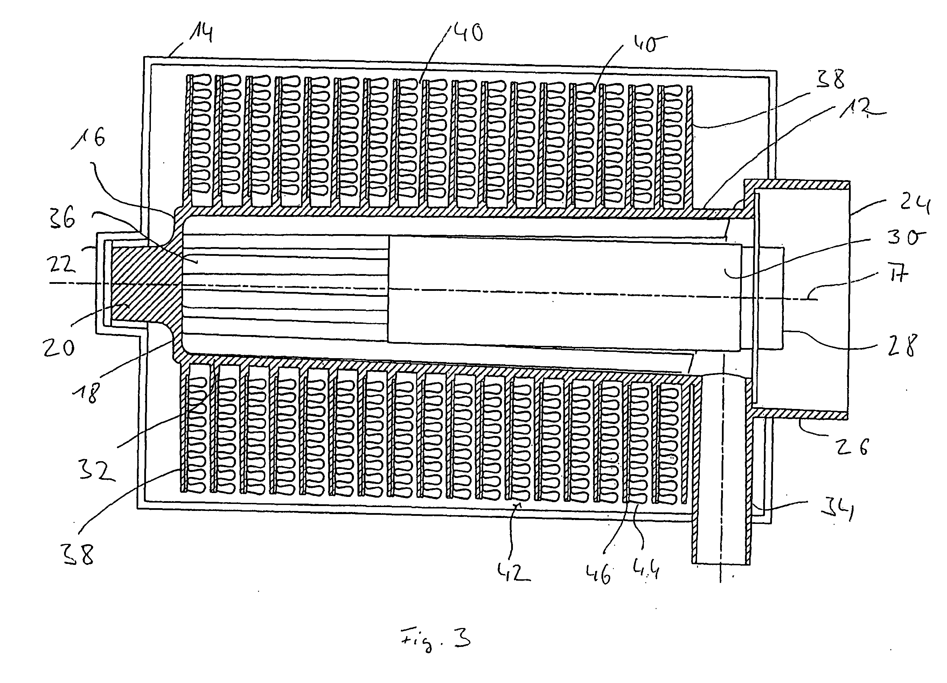

Die in den Figuren dargestellte erfindungsgemäße Wärmetauscherbaugruppe 10 umfasst einen vor allem in Fig. 3 deutlich erkennbaren, in Richtung einer Längsmittenachse A langgestreckten Wärmetauscherkörper 12. Dieser ist in einem Luftführungsgehäuse 14 einer Einrichtung zum Konditionieren von in einen Fahrzeuginnenraum einzuleitender Luft so angeordnet, dass seine Längserstreckungsrichtung, also auch die Längsmittenachse A, im Wesentlichen senkrecht steht zur Luftströmungsrichtung, die bei Betrachtung in Fig. 3 senkrecht zur Zeichenebene steht. An seinem ersten Endbereich 16 weist der Wärmetauscherkörper 12 einen Bodenbereich 18 auf. Von diesem steht ein Vorsprung 20 hervor und greift in eine Halteöffnung 22 des Luftführungsgehäuses 14 ein. Am anderen Endbereich 24 ist der Wärmetauscherkörper 22 mit einem erweiterten Ansatz 26 ausgebildet, in welchem die wesentlichen Systembereiche eines nur schematisch angedeuteten brennstoffbetriebenen Brenners 28, wie zum Beispiel auch ein Verbrennungsgebläse, angeordnet sind. Die Verbrennungsabgase, die bei der Verbrennung im Brenner 28 entstehen, treten in ein Flammrohr 30 ein, strömen durch dieses und gelangen am Ende des Flammrohrs 30 in Richtung zum Bodenbereich 18 in den Innenvolumenbereich des Wärmetauscherkörpers. Am Bodenbereich 18 werden die Verbrennungsabgase umgelenkt und strömen dann entlang der Innenoberfläche eines rohrartigen Abschnitts 32 des Wärmetauscherkörpers 12 und an der Außenseite des Flammrohrs 30 zurück zu einem Abgasauslass 34. Um bereits hier einen verbesserten Wärmeübertrag zu erlangen, sind an der Innenseite des rohrartigen Abschnitts 32 näherungsweise in der Längserstreckungsrichtung sich erstreckende Wärmeübertragungsrippen 36 vorgesehen. Man erkennt, dass der rohrartige Abschnitt 32 vom Endbereich 24 zum Endbereich 16 sich verjüngend ausgebildet ist. Hier könnte beispielsweise auch eine rein zylindrische Ausgestaltung, also mit gleichbleibender Abmessung ausgebildete Formgebung, gewählt werden. Die Verjüngung ist insbesondere zum Vorsehen einer Entformungsschräge bei Herstellung des Wärmetauscherkörpers 12 in einem Gussvorgang beispielsweise aus Aluminium vorteilhaft.

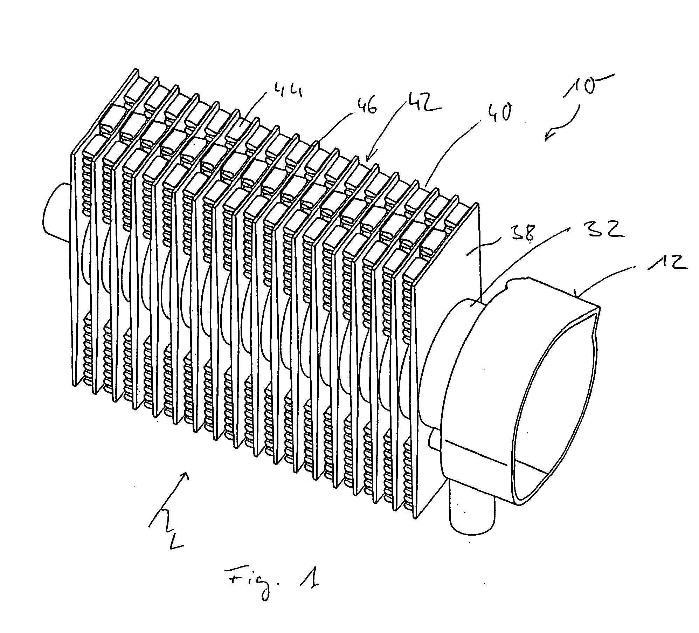

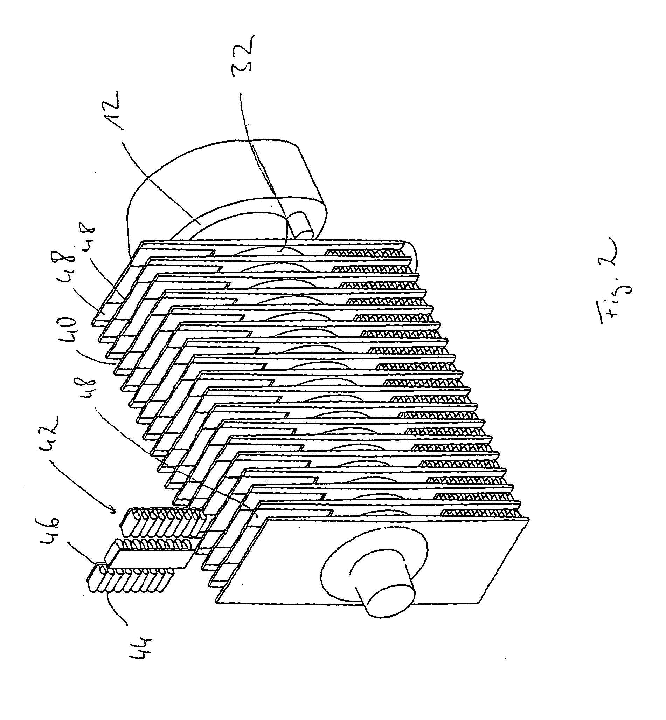

An einer Außenseite des rohrartigen Abschnitts 32 des Wärmetauscherkörpers 12 sind in Richtung der Längsmittenachse A aufeinander folgend mehrere Wärmeübertragungsrippen 38 vorgesehen. Wie man in den Fig. 1 und 2 erkennt, weisen diese eine näherungsweise rechteckige Außenumfangskontur auf und sind mit dem rohrartigen Abschnitt 32 integral verbunden. Das heißt, diese Wärmeübertragungsrippen 38 werden beim Gießvorgang, also allgemein beim Herstellungsvorgang des Wärmetauscherkörpers 12 mit angeformt. Der Wärmetauscherkörper 12 liegt mit seinem rohrartigen Abschnitt 32 näherungsweise mittig in den Wärmeübertragungsrippen 38, was den Vorteil hat, dass die vom rohrartigen Abschnitt 32 aufgenommene Wärme sehr gleichmäßig auf die zu beiden Seiten sich vom rohrartigen Abschnitt 32 weg erstreckenden Abschnitte einer jeweiligen Wärmeübertragungsrippe verteilt werden kann. Es ist selbstverständlich, dass, je nach Anforderung, auch eine unsymmetrische Ausgestaltung gewählt werden könnte. Weiterhin ist es selbstverständlich, dass die Wärmeübertragungsrippen 38 nicht notwendigerweise die dargestellte rechteckförmige Umfangskontur aufweisen müssen. Sie könnten gleichermaßen rund, oval oder quadratisch oder mit anderer Umfangskontur gestaltet sein. Auf Grund des nur begrenzt zur Verfügung stehenden Einbauraums in dem Luftführungsgehäuse 14 und unter Berücksichtigung einer möglichst effizienten Wärmeübertragung hat sich die dargestellte rechteckige Formgebung als besonders vorteilhaft erwiesen.

Es sei weiter darauf hingewiesen, dass selbstverständlich die Wärmeübertragungsrippen 38 nicht zwingendermaßen mit dem rohrartigen Abschnitt 32 integral ausgebildet sein müssen. Sie können auch als separate Bauteile angesetzt und beispielsweise durch Verlötung mit dem rohrartigen Abschnitt 32 verbunden werden.

Zwischen jeweils zwei in der Richtung der Längsmittenachse A aufeinander folgenden Wärmeübertragungsrippen 38 ist ein Zwischenraum 40 gebildet. Diesen Zwischenraum 40 durchströmt die zu erwärmende Luft wie durch den Pfeil L in Fig. 1 angedeutet näherungsweise parallel zu den Oberflächen der Wärmeübertragungsrippen 38. Auf diese Art und Weise wird die Luftströmung bei gleichwohl großer Wechselwirkungsfläche nur wenig beeinträchtigt, also gestaut.

Um die zur Wärmeübertragung nutzbare Oberfläche weiter vergrößern zu können, wird das Volumen der Zwischenräume 40 zur Aufnahme oberflächenvergrößernder Baugruppen 42 genutzt. In der dargestellten Ausgestaltungsform umfasst jede oberflächenvergrößernde Baugruppe 42 ein beispielsweise aus dünnem Blechmaterial aufgebautes und mit ondulierender Formgebung bereitgestelltes oberflächenvergrößerndes Element 44. Dieses oberflächenvergrößernde Element 44 ist in einem Scheitelbereich der ondulierenden Formgebung mit einem Träger 46 fest verbunden, beispielsweise durch Verkleben oder Verlöten. Dieses Trägerelement 46 ist vorzugsweise auch aus Metallmaterial oder einem anderen entsprechend gut wärmeleitenden Material aufgebaut.

Man erkennt in den Fig. 1 und 2, dass jeweils an beiden Seiten des rohrartigen Abschnitts 32 des Wärmetauscherkörpers 12 in den dort zwischen zwei benachbarten Rippen 38 gebildeten Zwischenräumen 40 jeweils drei oberflächenvergrößernde Baugruppen 42 nebeneinander vorgesehen sind. Dabei sind zwei dieser oberflächenvergrößernden Baugruppen an einer der einander unmittelbar gegenüberliegenden Wärmeübertragungsrippen 38 getragen, und die zwischen diesen beiden oberflächenvergrößernden Baugruppen liegende dritte oberflächenvergrößernde Baugruppe ist an der anderen der je paarweise einander zugeordneten Wärmeübertragungsrippen vorgesehen. Somit liegen die in der Luftströmungsrichtung aufeinander folgenden Träger 46 der in Strömungsrichtung aufeinander folgenden oberflächenvergrößernden Baugruppen 42 jeweils versetzt zueinander und sind an verschiedenen Wärmeübertragungsrippen 38 festgelegt. Zu den jeweils anderen Wärmeübertragungsrippen 38 weisen sie einen geringen Abstand auf. Dabei ist diese Gruppenanordnung in aufeinander folgenden Zwischenräumen 40 gleich.

Zur Festlegung der oberflächenvergrößernden Baugruppen 42 an den Wärmeübertragungsrippen 38 weisen diese in der Größe und Formgebung an die Größe bzw. auch Formgebung der Träger 46 angepasste und in Richtung vom rohrartigen Abschnitt 32 weg nach außen hin offene Aufnahmeaussparungen 48 auf. In diese Aussparungen 48 können die Träger 46 von außen eingeschoben werden, so dass durch diese Aussparungen 48 eine definierte Positionierung für jede Wärmeübertragung der Baugruppe 42 vorgegeben werden kann. Die Träger 46 können in den zugeordneten Aussparungen 48 durch Verklebung, Verlötung oder auch durch entsprechende Presspassung gehalten werden. Auf Grund der Tatsache, dass die Aussparungen 48 nach außen, also vom rohrartigen Abschnitt 32 des Wärmetauscherkörpers 12 weg, offen sind, können die oberflächenvergrößernden Baugruppen 42 in einfacher Art und Weise in diese Aussparungen eingebracht werden. Im Einbauzustand ergibt sich dann die insbesondere in den Fig. 1 und 3 erkennbare Ausgestaltung mit jeweils drei in Luftströmungsrichtung L aufeinander folgenden oberflächenvergrößernden Baugruppen 42, gestaffelt in zwei Gruppen zu beiden Seiten des zentral angeordneten rohrartigen Abschnitts 32 des Wärmetauscherkörpers 12. Da bei dieser Anordnung die oberflächenvergrößernden Elemente 44 so angeordnet sind, dass sie nur mit ihren schmalen Seiten der Luftströmung entgegengerichtet sind, ihre großen Oberflächen jedoch parallel zur Luftströmung liegen, führen sie trotz einer wesentlichen Oberflächenvergrößerung nur einen vergleichsweise geringen zusätzlichen Strömungswiderstand ein. Weiterhin wird durch die in Luftströmungsrichtung versetzte Positionierung der oberflächenvergrößernden Baugruppen 42 dafür gesorgt, dass eine nahezu gleichmäßige Wärmeaufnahme der durchströmenden Luft von beiden einander jeweils gegenüberliegenden Wärmeübertragungsrippen erfolgt, und kein in der Luftströmungsrichtung durchgehender Zwischenraum mit größerer Abmessung gebildet wird.

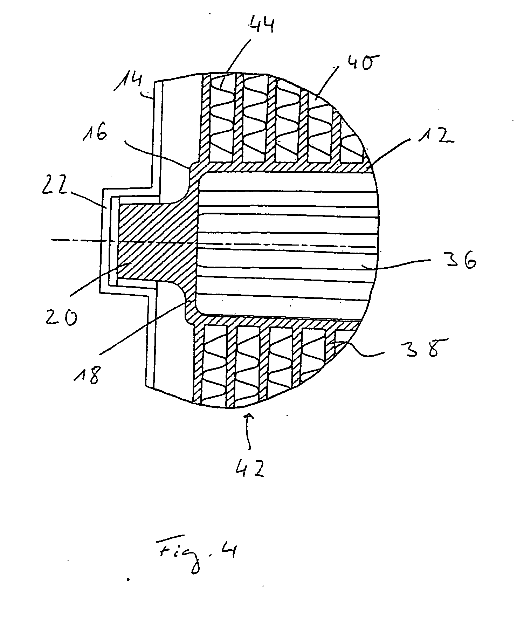

Es ist selbstverständlich, dass unter Beibehaltung des Prinzips der vorliegenden Erfindung, also der Positionierung oberflächenvergrößernder Baugruppen in den Zwischenräumen zwischen den einzelnen Wärmeübertragungsrippen dies in baulich anderer Weise realisiert sein kann. So ist es nicht unbedingt erforderlich, in der Luftströmungsrichtung mehrere derartige Baugruppen aufeinander folgen zu lassen. Eine einzige Baugruppe kann beispielsweise auch eine größere Erstreckung in der Luftströmungsrichtung L aufweisen. Auch ist es selbstverständlich möglich, dass, wie in Fig. 4 gezeigt, die oberflächenvergrößernden Elemente 44 unmittelbar, also unter Weglassung des einen Wärmeübertragungskontakt herstellenden Träger 46, an den Wärmeübertragungsrippen 38 vorgegeben werden können. Auch die Formgebung der oberflächenvergrößernden Elemente 44 kann anders sein. Beispielsweise kann hier auch eine zickzackartige oder sägezahnartige Formgebung gewählt werden. Grundsätzlich ist es auch denkbar, die oberflächenvergrößernden Elemente 44 so zu bemessen, dass sie die Erstreckung des Zwischenraums 40 zwischen zwei unmittelbar benachbarten Wärmeübertragungsrippen 38 vollständig ausfüllen und somit mit ihren jeweiligen Scheiteln an beiden Wärmeübertragungsrippen anliegen und ggf. zwischen diesen sogar geklemmt werden, wie auch in Fig. 4 gezeigt. Auf diese Art und Weise kann ein sehr guter Wärmeübertragungskontakt sichergestellt werden und es ist beispielsweise nur erforderlich, diese oberflächenvergrößernden Elemente an ihrem äußeren und von außen sehr leicht zugänglichen Bereich mit den Wärmeübertragungsrippen dann fest zu verbinden, beispielsweise durch Verlötung.

## Patentansprüche

1. Wärmetauscherbaugruppe, welche in einem Luftführungsgehäuse (14) einer Einrichtung zur Konditionierung von in einen Fahrzeuginnenraum einzuleitender Luft positionierbar ist, umfassend einen langgestreckten Wärmetauscherkörper (12), der in dem Luftführungsgehäuse (14) so zu positionieren ist, dass seine Längserstreckungsrichtung im Wesentlichen quer zur Luftströmungsrichtung ist, sowie eine Mehrzahl von von dem Wärmetauscherkörper (12) sich erstreckenden, zueinander im Wesentlichen parallelen Wärmeübertragungsrippen (38), wobei
in wenigstens einem zwischen zwei Wärmeübertragungsrippen (38) gebildeten Zwischenraum (40) wenigstens eine oberflächenvergrößernde Baugruppe (42) vorgesehen ist, **dadurch gekennzeichnet, dass**
wenigstens eine Wärmeübertragungsrippe (38)wenigstens eine Aufnahmeaussparung (48) für eine oberflächenvergrößernde Baugruppe (42) aufweist, und
die Aufnahmeaussparung (48) in Richtung zu einem von dem Wärmetauscherkörper (12) entfernt liegenden Ende der Wärmeübertragungsrippe (38) offen ist.

2. Wärmetauscherbaugruppe nach Anspruch 1, **dadurch gekennzeichnet, dass** die oberflächenvergrößernde Baugruppe (42) wenigstens ein oberflächenvergrößerndes Element (44) umfasst, das mit wenigstens einer der den Zwischenraum (40) begrenzenden Wärmeübertragungsrippen (38) in Wärmeübertragungskontakt steht.

3. Wärmetauscherbaugruppe nach Anspruch 2, **dadurch gekennzeichnet, dass** das oberflächenvergrößernde Element (44) wenigstens bereichsweise mit ondulierender oder rippenartiger Form ausgebildet ist.

4. Wärmetauscherbaugruppe nach Anspruch 3, **dadurch gekennzeichnet, dass** das oberflächenvergröβernde Element (44) an Scheitelbereichen mit wenigstens einer Wärmeübertragungsrippe (38) in Wärmeübertragungskontakt steht.

5. Wärmetauscherbaugruppe nach Anspruch 3 oder 4, **dadurch gekennzeichnet, dass** das oberflächenvergrößernde Element (44) an einem plattenartigen Träger (46) getragen ist und dass der plattenartige Träger (46) an einer der den Zwischenraum (40) begrenzenden Wärmeübertragungsrippen (38) festgelegt ist.

6. Wärmetauscherbaugruppe nach einem der Ansprüche 1-5 , **dadurch gekennzeichnet, dass** an einer Wärmeübertragungsrippe (38) mehrere Aufnahmeaussparungen (48) nebeneinander vorgesehen sind.

7. Wärmetauscherbaugruppe nach einem der Ansprüche 1 bis 6, **dadurch gekennzeichnet, dass** wenigstens eine oberflächenvergröβernde Baugruppe (42) mit wenigstens einer Wärmeübertragungsrippe (38) durch Verkleben oder/und Verlöten oder/und Presspassung fest verbunden ist.

8. Einrichtung zum Konditionieren von in einen Fahrzeuginnenraum einzuleitender Luft, umfassend ein Luftführungsgehäuse (14) und eine sich im Wesentlichen in dem Luftführungsgehäuse (14) erstreckende Wärmetauscherbaugruppe (10) nach einem der vorangehenden Ansprüche.

9. Einrichtung nach Anspruch 8, **dadurch gekennzeichnet, dass** der Wärmetauscherbaugruppe (10) ein mit flüssigem Brennstoff zu speisender Brennerbereich zugeordnet ist.

## Claims

1. A heat exchanger assembly which can be positioned in an air duct housing (14) of a device for conditioning the air to be inserted into a vehicle interior, comprising an elongate heat exchanger body (12) which is to be positioned in the air duct housing such that longitudinal extension direction is substantially transverse to the air flow direction, as well as a plurality of heat transfer ribs (38), extending from the heat exchanger body (12) and being substantially parallel to each other,
a surface increasing assembly (42) being provided in at least one interspace (40) formed between two heat transfer ribs, and **characterized in that**
at least one heat transfer rib (38) comprises at least one receiving recess (48) for a surface increasing assembly (42), and
the receiving recess (48) being open in the direction of an end of the heat transfer rib (38) remote to the heat exchanger body (12).

2. A heat exchanger assembly according to claim 1, **characterized in** the surface increasing assembly (42) comprising at least one surface increasing element (44) in heat transferring contact with at least one of the heat transfer ribs (38) defining the interspace (40).

3. A heat exchanger assembly according to claim 2, **characterized in** the surface increasing element (44) being designed at least partly with an undulating or rib-like shape.

4. A heat exchanger assembly according to claim 3, **characterized in** the surface increasing element (44) being in heat transferring contact with at least one heat transfer rib (38) at its apex regions.

5. A heat exchanger assembly according to claim 3 or 4, **characterized in** the surface increasing element (44) being carried at a plate-like carrier (46) and in the plate-like carrier (46) being settled at a heat transfer rib (38) defining the interspace (40).

6. A heat exchanger assembly according to one of claims 1 to 5, **characterized in** a plurality of receiving recesses (48) being provided next to one another at the heat transfer rib (38).

7. A heat exchanger assembly according to one of claims 1 to 6, **characterized in** at least one surface increasing assembly (42) being tightly connected to at least one heat transfer rib (38) by adhesion or/and soldering or/and force fitting.

8. A device for conditioning air to be inserted into a vehicle interior, comprising an air duct housing (14) and heat exchanger assembly (10) extending substantially into inside the air duct housing (14) according to one of the preceding claims.

9. A device according to claim 8, **characterized in** a burner section to be fed with liquid fuel being associated with the heat exchanger assembly (10).

## Revendications

1. Un module d'échangeur de chaleur à positionner dans un boîtier de guidage d'air (14) d'un dispositif pour conditionner l'air à insérer dans l'intérieur d'un véhicule, comprenant un corps d'échangeur de chaleur allongé (12), à positionner dans le boîtier de guidage d'air (14) tel que la direction de son orientation longitudinale est essentiellement transversale à la direction du courant d'air, et comprenant une pluralité de renforts de transmission de chaleur (38) s'étendant du corps d'échangeur de chaleur oblong (12) et étant essentiellement parallèles,
au moins un assemblage agrandissant la surface (42) étant prévu dans au moins un interstice (40) étant formé entre deux renforts de transmission de chaleur (38), **caractérisé en**
au moins un renfort de transmission de chaleur (38) comprenant au moins une encoche de réception (48) pour un assemblage agrandissant la surface (42), et
en l'encoche de réception (48) étant ouverte dans la direction d'une extrémité du renfort de transmission de chaleur (38) éloignée du corps d'échangeur de chaleur (12).

2. Un module d'échangeur de chaleur selon la revendication 1, **caractérisé par** l'assemblage agrandissant la surface (42) comprenant au moins un élément agrandissant la surface (44) qui est en contact de transmission de chaleur avec au moins un des renforts de transmission de chaleur (38) définissant l'interstice (40).

3. Un module d'échangeur de chaleur selon la revendication 2, **caractérisé par** l'élément agrandissant la surface (44) étant formé au moins partiellement d'une manière ondoyante ou comme un renfort.

4. Un module d'échangeur de chaleur selon la revendication 3, **caractérisé par** l'élément agrandissant la surface (44) étant dans ses régions vertex en contact de transmission de chaleur avec au moins un renfort de transmission de chaleur (38).

5. Un module d'échangeur de chaleur selon les revendications 3 ou 4, **caractérisé par** l'élément agrandissant la surface (44) étant porté par un support en forme de plaque (46) et par le support en forme de plaque (46) étant établi à un renfort de transmission de chaleur (38) définissant l'interstice (40).

6. Un module d'échangeur de chaleur selon une des revendications 1 à 5, **caractérisé par** plusieurs encoches de réception (48) étant prévues côte à côte à un renfort de transmission de chaleur (38).

7. Un module d'échangeur de chaleur selon une des revendications 1 à 6, **caractérisé par** au moins un assemblage agrandissant la surface (42) étant raccordé fermement à au moins un renfort de transmission de chaleur (38) par collage ou/et par soudage ou/et par ajustement pressé.

8. Dispositif pour conditionner l'air à insérer dans l'intérieur d'un véhicule, comprenant un boîtier de guidage d'air (14) et un assemblage d'échangeur de chaleur (10) s'étendant essentiellement dans le boîtier de guidage d'air (14) selon une des revendications précédentes.

9. Dispositif selon la revendication 8, **caractérisé par** une section de brûleur à alimenter avec du combustible liquide étant associée à l'assemblage d'échangeur de chaleur (10).
